# EUROPEAN PATENT APPLICATION

(11) **EP 2 515 153 A1**
(43) Date of publication of application: **24.10.2012**
(21) Application number: 11163274.1
(22) Date of filing: 20.04.2011
(51) Int. Cl.: G02B 21/08, G02B 21/10

(54) **A dark field microscopy device**

(71) Applicant: Braedius Scientific B.V., 1272 PM Huizen (NL)
(72) Inventor: Messie, Frank, 1272 PM Huizen (NL)
(74) Representative: Jansen, Cornelis Marinus

(57) **Abstract**

The invention relates to a dark field microscopy device 10 for investigating an object 8 comprising an applicator body 2 provided with at least one light source 5, said applicator body being adapted to cooperate with a replaceable applicator cap 1, wherein the applicator cap is arranged with a light conductor 7a, 7b for conducting light emitted by the at least one light source 5 to the object 8.

## Description

### FIELD OF THE INVENTION

The invention relates to a dark field microscopy device.

The invention further relates to an applicator cap for use with the dark field microscopy device.

### BACKGROUND OF THE INVENTION

An embodiment of a dark field microscopy unit is known from H. Sherman et al "Incident dark-field illumination: a new method for microcirculatory study", Angiology 1971; 22; 295. In the known system a microscope having an optical axis and a field of view and cooperating with a suitable off-axis light source is arranged to enable microcirculatory studies. For this purpose light is derived through a circular prismatic lens surrounding the objective lens which throws a halo of light around and beyond the objective focal point. This mode of illumination provides a suitable depth of field and a three-dimensional quality to the observed tissue. For enabling image capture the known apparatus comprises a suitable camera cooperating with the optical system of the microscope.

It is a disadvantage of the known apparatus that quality of acquired images may be reduced due to reflections of the light generated by the light source in or near the field of view of the microscope.

Another embodiment of the dark field microscopy unit comprising an applicator is known from US2009/0012378. In the known system the hand-operated applicator is provided comprising a light source, a light transport body configured to project light from the light source to an examination substance and to transmit light reflected by the examination substance. In the known applicator in order to avoid undesirable propagation of light from the light source towards the light detection system a set of built-in shields is provided. It is a disadvantage of the known apparatus that complicated measures have to be undertaken for protecting the light detector from the primary incident light, i.e. light emanated from the build-in light source on one hand, and that the undesirable light reflections occur in or near the field of view of the light detector. This disadvantage is severely increased when an applicator cap, which must be used for protecting the applicator body from patient to patient contamination, where this applicator cap does not provide or unsufficiently provides a shielding of the light emitting from the light source from the light transmitted to the light detection system.

### SUMMARY OF THE INVENTION

It is an object of the invention to provide a dark field microscopy device wherein the problems of the prior art are mitigated. In particular, it is an object of the invention to provide an improved dark field microscopy device wherein light delivery from the light source towards an object conceived to be examined is improved.

To this end the dark field microscopy device for investigating an object according to the invention comprises an applicator body provided with at least one light source, said applicator body being adapted to cooperate with a replaceable applicator cap, wherein the applicator cap is arranged with a light conductor for conducting light emitted by the at least one light source to the object.

An aspect of the invention is based on the insight that an applicator cap, which may be used for protecting the applicator body from patient to patient contamination, may be provided with suitable light guiding system for improving light delivery from the build-in light sources towards the object. It will be appreciated that the light guiding system may comprise different means. First, it may be based on a number of built-in optical elements, such as lenses, prisms and so forth. Alternatively, the light guiding system may be implemented as a continuous shell inside the applicator cap. Preferably, the continuous shell is cone-shaped and comprises a suitable light guiding material. Still alternatively, the light guiding system may comprise an optical light fiber which may be adapted to run along a suitable trajectory inside the cap from a first position corresponding to a position of the built-in light sources towards the second position corresponding to a desirable light output position. It is found that use of the optical fibers may be advantageous as light is conducted with narrow beam geometry. It is found to be advantageous to use the narrow beam geometry for illuminating the object conceived to be examined because a substantially non-diverging illumination set-up may be achieved. Those skilled in the art of dark field microscopy will readily appreciate that a non-diverging light beam may be advantageous it may generate less side- and back-reflections which are undesirable as this light may reach the light detector and thereby reduce quality of the acquired images.

In an embodiment of the invention, the applicator cap is provided with one or more light fibers conceived to be coupled to the said at least one light source when the light cap is affixed to the applicator body.

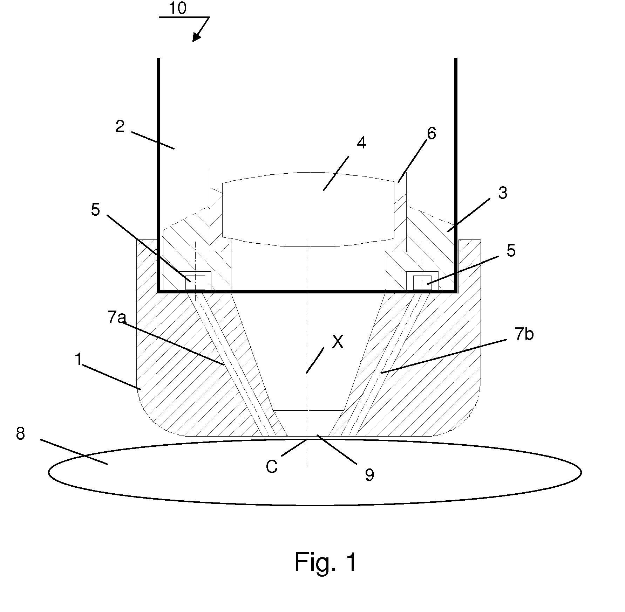

It is found to be advantageous to provide a plurality of light sources, such as LED sources, for example arranged in a circle about the light detector. In this case, a corresponding plurality of optical fibers may be provided for guiding light from each LED towards the surface of the object conceived to be examined. More details on this embodiment will be discussed with reference to Figure 1.

In a further embodiment of the dark field microscopy device according to the invention, the applicator body comprises an optical unit having an axis and a field of view, the said at least one light source being arranged off-axis, the said one or more light fibers being arranged to tangentially propagate from a position of the said at least one light sources towards the axis.

The applicator body may comprise a suitable lens which may be optically coupled to a camera. The lens may be provided with its optical axis coinciding with a longitudinal axis of the applicator body. According to the present aspect of the invention the light fibers may be arranged to tangentially propagate inside the applicator cap from the first position, corresponding to the position of the light sources, towards the second position, corresponding to the desired light exit position. It will be appreciated that according to the dark field imaging principles the light delivered from the light source enters the object off-axis with respect to the optical system of the microscopy applicator. In accordance with the invention, it is found that optical fibers are particularly suitable for this purpose as they are capable of delivering narrow light beams at a pre-determined position.

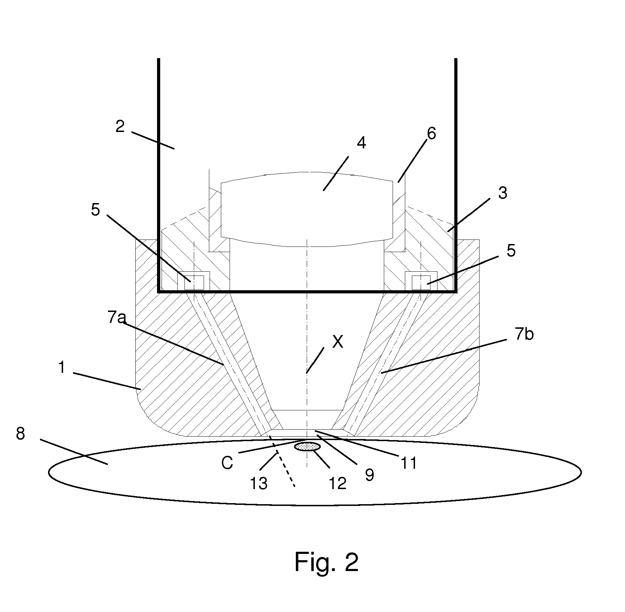

Preferably, the one or more light fibers are arranged to tangentially propagate in the applicator cap with an angle of +- 30 degrees with respect to the axis of the optical unit, such as a lens. This embodiment will be explained in more details with reference to Figure 2.

In a still further embodiment of the dark field microscopy device according to the invention, the applicator body comprises an optical unit having an axis and a field of view, the said at least one light source being arranged off-axis, the said one or more light fibers being arranged to propagate along a curved line from a position of the said at least one light sources towards the axis.

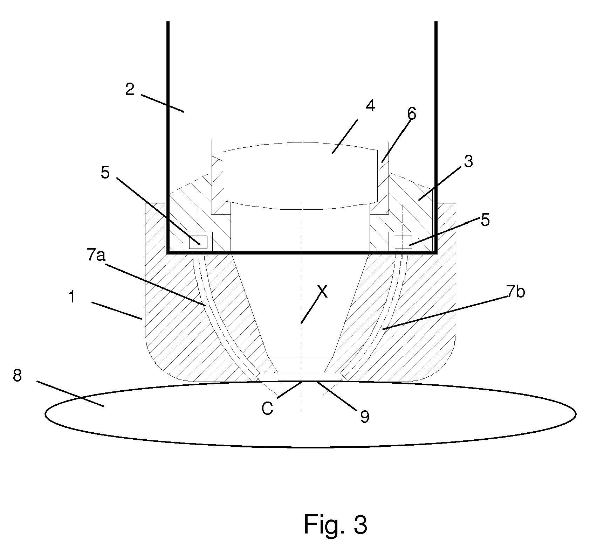

It is found to be particularly advantageous to allow the optical fibers to run along a curved line inside the applicator cap. This embodiment has an advantage that the exit angle of the light exiting the optical fiber and entering the object conceived to be investigated may be modified. In particular, it is possible to achieve that light enters the object at a suitable angle to prevent shadowing in the field of view. This embodiment will be discussed in more detail with reference to Figure 3.

In a still further embodiment of the dark field microscopy device according to the invention the applicator cap further comprises an exit optical element for coupling light emanating from the light conductor towards the object.

The invention further relates to an applicator cap for a dark field microscopy device arranged for investigating an object, the microscopy device comprising an applicator body provided with at least one light source, wherein the applicator cap is adapted to cooperate with the microscopy device in use, the applicator cap being arranged with a light conductor for conducting light emitted by the at least one light source to the object.

Advantageous embodiments of the applicator are discussed with reference to Figures 1 - 4. Further advantageous embodiments of the applicator cap are recited in the dependent claims.

These and other embodiment of the invention will be discussed in more details with reference to drawings, wherein like reference numerals refer to like elements. It will be appreciated that the drawings are presented for illustrative purposes only and may not be used for limiting the scope of the appended claims.

### BRIEF DESCRIPTION OF THE DRAWINGS

Figure 1 presents schematically a cross-section of an embodiment of the dark field microscopy device according to an aspect of the invention.
Figure 2 presents schematically a cross-section of an embodiment of the dark field microscopy device according to a further aspect of the invention.
Figure 3 presents schematically a cross-section of an embodiment of the dark field microscopy device according to a still further aspect of the invention.
Figure 4 presents schematically a three dimensional view of an embodiment of the dark field microscopy device comprising of a continuous circular conical light guide with internal reflection properties similar to an optical fiber according to a still further aspect of the invention.

### DETAILED DESCRIPTION OF THE DRAWINGS

Figure 1 presents schematically a cross-section of an embodiment of the dark field microscopy device according to an aspect of the invention. The dark field microscopy device 10 according to the invention is arranged for investigating an object 8. The dark field microscopy device 10 comprises an applicator body 2 provided with at least one light source 5, said applicator body being adapted to cooperate with a replaceable applicator cap 1, wherein the applicator cap is arranged with a light conductor 7 for conducting light emitted by the at least one light source 5 to the object 8. It will be appreciated that the applicator body may be connected to an external electronics or data processing system (not shown), which is commonly known in the art of dark filed microscopy devices. It will be further appreciated that the applicator body 2 may be held and manipulated by hand.

In order to detect light reflected from the object 8 the dark field device 10 comprises a lens 4 having an optical axis X and a field of view determined by a window 9 provided in the applicator cap 1. The lens 4 may be provided in a dedicated housing 6. The light sources 5 may be housed in a separate housing 3. In accordance with an aspect of the invention a suitable plurality of light sources 5 may be provided, for example in a circle surrounding the optical axis X of the lens. It will be appreciated that although further hard-ware elements of the dark-field microscopy device 10 are not depicted, those skilled in the art would readily appreciate which hardware and/or software may be essential for acquiring reflected light from the object 8. For example, a camera may be provided cooperating with the lens 4 for recording the images. It will be further appreciated that the images may refer to circulation images, oxygen saturation images and so forth. Other images capable of producing using the dark field microscopy technique are contemplated as well.

In accordance with an aspect of the invention a light guide is provided in the applicator cap 1 for conducting light emanating from the light source towards the object 8. In this particular embodiment optical fibers 7a and 7b are schematically depicted. It will be appreciated that the number of optical fibers preferably matches the number of light sources provided in the applicator body.

It is found to be advantageous to provide the light guiding system in the applicator cap 1, as a well-defined light spot may directly be delivered by the applicator cap to a desirable area of the object 8. In addition, problems of undesirable primary radiation reaching the detector system are overcome with the arrangement according to the invention.

Figure 2 presents schematically a cross-section of an embodiment of the dark field microscopy device according to a further aspect of the invention. In this particular embodiment optical element 11 is provided cooperating with the window 9 as is depicted in Figure 1. The optical element 11 is used for ensuring that the light emanating from the optical fiber 7a, having the axis 13, impinges the object 8 with a desirable angle. For example, the optical element 11 may refer to a suitable prism. In this case the light emanating from the optical fiber 7a may be suitably scattered to ensure that the area 12 is illuminated. This feature is useful for ensuring that no shadows are generated with the applicator cap according to the invention.

Figure 3 presents schematically a cross-section of an embodiment of the dark field microscopy device according to a still further aspect of the invention. In this particular embodiment the light fibers 7a and 7b are running in the applicator cap 2 along a curved line. This embodiment is found to be advantageous as the exit angle of the light emanating from the optical fibers may be further optimized ensuring that the shadow area, as discussed with reference to Figure 2, is completely avoided.

Preferably, the applicator cap as is discussed with reference to the foregoing is reusable. Alternatively, the applicator cap 1 provided with the light guiding system may be disposable. The applicator cap may be manufactured from a suitable solid material, for example, it may be manufactures from plastics. Preferably, the material of the applicator cap is transparent. This may be advantageous for enabling the user to inspect whether the light coupling between the light sources in the applicator body and the light guiding system provided in the applicator cap is good.

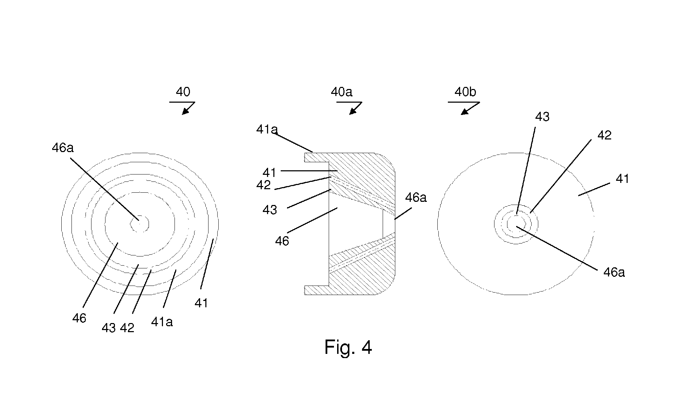

Figure 4 presents schematically a cross-section of an embodiment of the dark field microscopy device 40 according to a still further aspect of the invention. In this particular embodiment there is continuous circular light guide 42 conically shaped towards the object plane.

The material of the light guide may be selected for enabling excellent light transmission properties. Those skilled in the art will readily appreciate which materials are useful for this purpose. The surface of the conical shape of the light guide 42 may be treated in such a way that complete internal reflection of the light occurs.

In the left view a cross-section along the applicator cap is shown. The shells 41, 41a correspond to the outer portion of the applicator cap, shown in view 40a of Figure 4. The shell 43 corresponds to the inner portion of the applicator cap. The portion 46, being a substantially empty space, corresponds to the cone-shaped body defining a window of the applicator cap shown in view 40a as item 46a.

The view 40b represents a bottom view of the applicator cap according to the present embodiment of the invention. The cone-shaped continuous light guide 42 is provided between the inner portion of the applicator cap material 43 and the outer portion of the applicator cap material 41.

This embodiment is found to be advantageous as it provides excellent propagation continuity of the emitted light along the perimeter of the field of view defined by the window 46a, depicted in view 40a. This embodiment is also found to be advantageous as it allows different light sources along the entrance with different wavelength properties to be combined where there is no separation between those different sources, resulting in a very flexible configuration of light sources. Preferably, the applicator cap as is discussed with the reference to the foregoing is reusable. Alternatively, the applicator cap provided with the light guiding system may be disposable. In this embodiment the applicator cap may be manufactured from a suitable solid, non transparent material to enhance the internal reflection in the light guide.

It will be appreciated that while specific embodiments of the invention have been described above, that the invention may be practiced otherwise than as described. In particular, it will be appreciated that still different embodiments of the light conductor may be used. Accordingly, the invention is not limited to the features described with reference to particular embodiments. In addition, isolated features discussed with reference to different drawings may be combined.

## Claims

1. A dark field microscopy device for investigating an object comprising an applicator body provided with at least one light source, said applicator body being adapted to cooperate with a replaceable applicator cap, wherein the applicator cap is arranged with a light conductor for conducting light emitted by the at least one light source to the object.

2. The dark field microscopy device according to claim 1, wherein the applicator cap is provided with one or more light fibers conceived to be coupled to the said at least one light source when the light cap is affixed to the applicator body.

3. The dark field microscopy device according to claim 2, wherein the applicator body comprises a optical unit having an axis and a field of view, the said at least one light source being arranged off-axis, the said one or more light fibers being arranged to tangentially propagate from a position of the said at least one light sources towards the axis.

4. The dark field microscopy device according to claim 3, wherein the one or more light fibers are arranged to tangentially propagate in the applicator cap with an angle of +- 30 degrees with respect to the axis of the optical unit.

5. The dark field microscopy device according to claim 2, wherein the applicator body comprises an optical unit having an axis and a field of view, the said at least one light source being arranged off-axis, the said one or more light fibers being arranged to propagate along a curved line from a position of the said at least one light sources towards the axis.

6. The dark field microscopy device according to claim 1, wherein the light conductor is a continuous cone-shaped body provided as a shell inside the applicator cap.

7. The dark field microscopy device according to any one of the preceding claims, wherein the applicator cap further comprises an exit optical element for coupling light emanating from the light conductor towards the object.

8. An applicator cap for a dark field microscopy device arranged for investigating an object, the microscopy device comprising an applicator body provided with at least one light source, wherein the applicator cap is adapted to cooperate with the microscopy device in use, the applicator cap being arranged with a light conductor for conducting light emitted by the at least one light source to the object.

9. The applicator cap according to claim 8, wherein the applicator cap is provided with one or more light fibers conceived to be coupled to the said at least one light source when the light cap is affixed to the applicator body.

10. The applicator cap according to claim 9, wherein the applicator body comprises an optical unit having an axis and a field of view, the said at least one light source being arranged off-axis, the said one or more light fibers being arranged to tangentially propagate from a position of the said at least one light sources towards the axis.

11. The applicator cap according to claim 10, wherein the one or more light fibers are arranged to tangentially propagate in the applicator cap with an angle of +- 30 degrees with respect to the axis of the optical unit.

12. The applicator cap according to claim 9, wherein the applicator body comprises an optical unit having an axis and a field of view, the said one or more light fibers being arranged to propagate along a curved line from a position of the said at least one light sources towards the axis.

13. The applicator cap according to claim 8, wherein the light conductor is a continuous cone-shaped body provided as a shell inside the applicator cap material.

14. The applicator cap according to claim any one of the preceding claims 8 - 13, wherein the applicator cap further comprises an exit optical element for coupling light emanating from the light conductor towards the object.

15. The applicator cap according to any one of the preceding claims 8 - 14, wherein the applicator cap is reusable.
